Europäisches Patentamt

European Patent Office

Office européen des brevets

(19)

(11) Publication number: **0 109 278**
**B1**

(12) **EUROPEAN PATENT SPECIFICATION**

(45) Date of publication of patent specification: **13.01.88**

(51) Int. Cl.⁴: **G 01 N 35/08**

(21) Application number: **83306892.7**

(22) Date of filing: **11.11.83**

(54) Single channel continuous flow system.

(30) Priority: **15.11.82 US 441881**

(43) Date of publication of application:
**23.05.84 Bulletin 84/21**

(45) Publication of the grant of the patent:
**13.01.88 Bulletin 88/02**

(84) Designated Contracting States:
**BE CH DE FR GB IT LI NL SE**

(56) References cited:
**US-A-3 485 295**
**US-A-3 826 615**
**US-A-4 253 846**

(73) Proprietor: **TECHNICON INSTRUMENTS CORPORATION**
**511 Benedict Avenue**
**Tarrytown, New York 10591 (US)**

(72) Inventor: **Saros, Stephen**
**1249 Hawthorne Drive West**
**Wantagh New York 11793 (US)**
Inventor: **Smith, John L.**
**40 Strawtown Road**
**New City New York 10956 (US)**
Inventor: **Cassaday, Michael M.**
**188 Prospect Avenue Valhalla**
**New York New York 10595 (US)**
Inventor: **Herron, Rand E.**
**56 Old Highway**
**Wilton Connecticut 06897 (US)**
Inventor: **Pelavin, Milton H.**
**31 Whitlaw Lane**
**Chappaqua New York 10514 (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

EP 0 109 278 B1

## Description

The present invention relates to an apparatus for, and method of, continuous flow analysis, the apparatus and method being particularly useful for mixing liquid samples with previously separate processing liquids, such as reagents or diluents, in continuous flow analyzers.

Automated apparatus for the analysis of liquid samples as a flowing stream is described in U.S. Patents Nos. 2,797,149 and 2,879,141. In this basic apparatus, the liquid samples are sequentially aspirated from storage containers into a conduit, each sample being separated from adjacent samples by successive segments of air. Also, air is introduced between successive segments of an individual sample to promote intrasample mixing and between samples to prevent intersample contamination. Such air/sample sequences can be alternated with air/wash liquid sequences to further ensure against carryover. As illustrated by Ferrari in U.S. Patent No. 2,933,293, a junction can be provided in the conduit, at which junction a processing liquid such as a reagent can be continuously introduced into the alternating sequence of air and sample segments and also, into wash segments when present. In apparatus such as that described above, the fluid stream containing air segments and segments of combined sample and processing fluid can be "debubbled" immediately before entering a flow cell through which the reacted samples are read. Thus, upon removal of the air segments, the successive sample segments contact one another just before entry into the flow cell. The debubbler is positioned adjacent to the flow cell to prevent undesirable intermixing between liquid segments. Alternatively, as in high throughput systems, the debubbler can be omitted and the air segments passed through the flow cell.

U.S. Patent No. 3,109,713 also discloses an analysis apparatus in which processing fluids, such as reagents, are continuously introduced into a stream of alternating air and sample segments, at a junction of conduits. A series of substantially identical segments of a single processed sample is then passed through a debubbler. The air is abstracted to consolidate and blend the segments of processed liquid which are passed through a flow cell. Debubbling and blending is done to prevent disruption of colorimeter operation by the optical properties of the air bubbles.

Smythe et al U.S. Patent No. 3,804,593 discloses an analysis apparatus having a first tube which receives samples from vessels on a turntable, and a second tube which receives reagent liquid from a stationary reagent container. Both tubes are inserted simultaneously into their respective containers repeatedly to provide a flowing stream of segments of liquid sample interspersed by air segments and a similarly segmented stream of reagent. These streams are then merged to form an alternating sequence of air and sample/reagent segments which are then analyzed.

In each of the prior art systems, the reagent is reactive with the sample immediately upon introduction into the system. Also, reagent is mixed with sample by feeding the reagent into a conduit within which the sample is already flowing. This is quite a difficult technique in that precise phasing is required. Phasing problems become much more acute where two-stage reactions are needed (these are reactions where a first reaction must be completed before a second is commenced). In order to perform two-stage reactions, reagents need to be fed into the sample mixture at two or more different points in the system and this requires a complex conduit system especially when the system is needed to perform different analyses on a random basis along the same conduit. The phasing problems are especially severe in high flow rate systems using small volumes of sample, and it is because of these problems that prior art systems have generally been adapted only to perform single stage reactions.

US—A—3826615 illustrates another continuous flow analysis method and apparatus which require very accurate phasing. Sample segments (separated by small air segments, with occasional wash segments) are passed along a first conduit and combined, with precise phasing, with separate supplies of reagent or diluent, and air. The series of segments is flowed into a large diameter conduit in which the small air segments are non-occlusive, so allowing combining of adjacent sample segments or sample and wash segments.

We have now devised a method and apparatus for continuous flow analysis which does not require phased introduction of reagents at spaced points along the conduit or channel, and yet is capable of single or two stage reactions. In accordance with a feature of the present invention, a conduit is used which is adapted to receive fluid (e.g. sample, air or other gas, reagents, buffers etc.) only at one end. Thus all the reactants, spacer segments etc. are fed into one end only of the conduit, and are not introduced at spaced locations therealong.

Further, in accordance with the invention delayed intermixing of separated liquid segments, is achieved at selected points along the conduit whilst flow of the liquid stream continues. Thus, by forming an appropriately segmented stream in the conduit, mixing of selected adjacent liquid segments is achieved as the stream flows through the conduit.

According to the invention, there is provided apparatus for continuous flow analysis, which apparatus comprises a conduit having in sequence a first, a second and a third section, introducing means for introduing fluids into the conduit, means for pumping through the conduit a fluid stream comprising at least a first ($R_1+S$) and a second ($R_2$) liquid segment separated by an immiscible fluid segment ($A_1$); means in said second section of the conduit for displacing said immiscible fluid segment to allow said first and second liquid segments to combine and thereafter pass along said third conduit section whilst undergoing complete mixing therein, and means for receiving said mixture from said third section;

characterised in that: the conduit is arranged to receive fluid only at one end thereof, said introducing means introducing said liquids and fluid at said one end of said conduit into said first section thereof.

The invention also includes a continuous flow analysis method which comprises pumping a fluid stream, comprising at least first and second liquid segments ($R_1+S$; $R_2$) separated by an immiscible fluid segment ($A_1$), through a conduit comprising in sequence a first section, a second section and a third section, and displacing the immiscible fluid segment to cause the first and second liquid segments to combine in the second section and to undergo complete mixing whilst passing along the third section;

characterised in that: the liquid and fluid segments are all introduced into said conduit at one end only to flow into the said first section of the conduit.

The present invention provides selective reagent access capability over a wide range of assay potential, combined with a throughput and time-delayed fluid segment mixing capacity not previously available. Thus, for example, only the specific assays requested for a particular sample are run, and they can be processed in any order. These combined advantages are achieved in a system of elegant simplicity and require no phased introduction of reagents at spaced points along the conduit or channel. All of the samples to be assayed and all of the reagents required are introduced through a single aspirating probe. All tests for every sample, whether requiring a one-stage or two-stage reaction, are processed through a single analytical channel.

The invention makes possible the delayed intermixing of separated liquid segments, such as by displacement, fragmentation or physical removal of intervening immiscible segments, at selected points along a conduit while flow of the liquid stream continues. Of the separated segments, one segment can, for example, be a sample while the segment with which it is combined can be a reagent, diluent or other liquid. Mixing of the combined segments is completed during flow along the remainder of the conduit, so as to deliver a completely mixed segment to succeeding elements of the system.

According to one preferred aspect of the present invention, the conduit sections are adapted so that said first immiscible segment is occlusive in said first section of conduit and non-occlusive in at least a portion of said second section and in said third section, said second section preferably being of a diameter greater than that of said first section.

According to another preferred feature, means are preferably provided to supply to the inner surface of said conduit a coating of a continuous film of a liquid which is immiscible with said fluid package and which preferentially wets said inner surface.

One particularly preferred arrangement of the invention comprises a solid fluorocarbon conduit having an inner surface which (in use) is coated with a continuous film of a liquid fluorocarbon; an aspirating probe and associated metering assembly adapted to introduce successive liquid segments which are different components of a reaction mixture and separated by at least one gas segment into the first section of said conduit, said gas segment being occlusive in said first conduit section; the second section of said conduit having a diameter sufficient to render said gas segment non-occlusive, thereby combining said separated segments, upstream of said pump; a detector assembly along said third conduit section which comprises at least one colorimeter and at least one ion selective electrode; a peristaltic pump for passing said segments through said conduit which is along said third conduit section downstream from said detector assembly; and a controller for controlling the aspirating probe and associated metering assembly, detector assembly and pump.

By "system" herein we mean not only apparatus in an operational condition, but also such apparatus which is not in an operational condition, i.e. which does not have working fluids therein.

In order that the invention may be more fully understood, preferred embodiments thereof will now be described, by way of example only, with reference to the accompanying drawings, wherein:

Fig. 1 illustrates a preferred embodiment of a single channel continuous flow system of the present invention.

Fig. 2 is an enlarged view of the reagent dispenser illustrated in Fig. 1.

Fig. 3 is a detailed view of the metering assembly referred to in Fig. 1.

Fig. 3A illustrates the sequence of separated segments provided in accordance with a preferred method using the metering apparatus of Fig. 3.

Figs. 4A—4E are sequential diagrammatic views illustrating the combination of separated liquid segments and immiscible segments along the conduit as contemplated by a preferred embodiment of the invention.

Figs. 5A—5C are sequential diagrammatic views illustrating the combination of separated liquid segments and immiscible segments along the conduit as contemplated by an alternative embodiment of the invention.

Fig. 6 illustrates another embodiment of the single channel continuous flow system of the invention in which related first and second reagents are respectively disposed in separate reagent dispensers on separated reagent turntables.

Fig. 7 is an enlarged view of the reagent dispenser illustrated in Fig. 6.

Although specific terms are used in the following description for clarity, they refer only to the particular embodiment(s) selected for illustration, and are not intended to limit the scope of the invention.

The system of the present invention is particularly suitable for continuous flow analyzers which are used to detect an analyte in a liquid sample. Sample fluids on which tests are performed include biological, physiological, industrial, environmental and other types of liquids. Of particular interest are biological fluids such as whole blood, serum, plasma, urine, cerebrospinal fluid, broth and other culture media and supernatants as well as fractions of any of them. Physiological fluids of interest include infusion solutions, buffers, preservative or antimicrobial solutions and the like. Industrial liquids include fermentation media and other processing liquids used, for example, in the manufacture of pharmaceuticals, dairy products and malt beverages. Other sources of sample fluid which are tested by conventional methods are contemplated as within the meaning of this term as used and can, likewise, be assayed in accordance with the invention.

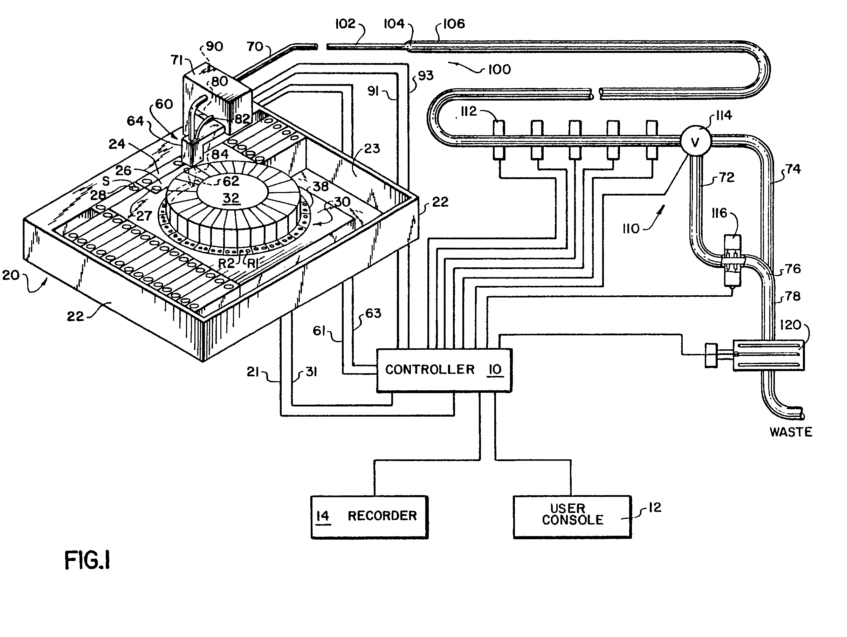

Referring now to Fig. 1, controller 10 is a general purpose digital computer with a stored (fixed) program which is connected with user console 12 and recorder 14. User console 12 conventionally includes a cathode ray tube (CRT) terminal and keyboard. Recorder 14 conventionally includes a printer for recording the test data of each analysis. Controller 10 instructs, monitors and controls the sequence and coordination of system operations, as more fully described below, as well as calculates and monitors the quality of results and provides data output in a variety of formats.

Sample assembly 20 includes sample table 22 which holds a plurality of sample carrier blocks 24 and a shuttle carrier 26. Each such carrier block 24 carries a plurality of sample vessels 28 containing a body fluid sample S (e.g. serum). As directed by controller 10 along lead 21, sample blocks 24 are sequentially advanced, in a clockwise direction, so as to be successively positioned to present sample vessels 28 carried thereon, in turn, for aspiration. Adjacent carrier block 24, presented for aspiration, is shuttle carrier 26 which holds ancillary fluid vessels 27 containing ancillary fluids such as calibrators, dyes, controls, and the like. When the system has completed the necessary aspiration of sample S from all of the sample vessels 28 of a particular carrier block 24, that sample carrier block 24 is moved to a holding area 23 of sample table 22.

Reagent assembly 30 includes reagent turntable 32 connected to bidirectional rotational drive means (not shown). The drive means is activated by controller 10 along lead 31 connected to the non-illustrated drive means to impart a metered rotation of reagent turntable 32 to present a selected reagent dispenser 38 for aspiration. Reagent turntable 32 is provided with one row of reagent dispensers 38. Each of reagent dispensers 38 contains the components necessary to dispense the first reagent $R_1$ and the second reagent $R_2$ of two reagents necessary for two-stage reaction with a sample S. The drive means rotates turntable 32 slightly after aspiration of first reagent $R_1$ to present the second reagent $R_2$ for aspiration. Reagent dispenser 38 is described in more detail with reference to later drawings.

Probe assembly 60 includes probe 62 which aspirates sample, reagent and air into conduit 70. Probe 62 is carried at one end of probe arm 64, the other end of which is connected to bidirectional linear drive means (not shown). Directed by controller 10 along lead 61, the drive means imparts bidirectional horizontal movement of probe arm 64 to position probe 62 over a selected sample vessel 28, ancillary fluid vessel 27, or reagent dispenser 38 which has been presented for aspiration. Additionally, the drive means imparts bidirectional vertical movement, under control of controller 10 along lead 63, to probe 62 which is thereby lowered into sample vessel 28 or reagent dispenser 38 and, after aspiration, raised. Aspiration of fluids is effected by pumping means which is located at the downstream end of the system and is more fully described below. The aspirated liquid segments are passed along the conduit. Preferably, the inner surface of the conduit is coated with an immiscible liquid, such as described in Smythe et al. U.S. Patent No. 3,479,141 to prevent undesirable carryover contamination.

Housing 71 encloses an immiscible liquid dispenser assembly 80 which includes a reservoir (not shown) which introduces immiscible liquid IL into the inlet of feed tube 82, the outlet of which connects to applicator shroud 84. Immiscible liquid IL is dispensed from applicator shroud 84 onto the outer surface of probe 62. Immiscible liquid IL preferentially wets and forms a continuous film over the outer and inner surfaces of probe 62, the inner surface of conduit 70 and other conduits of the system to prevent the carryover contamination referred to above. In operation, probe 62 passes through a lens of immiscible liquid IL formed, manually or by an automated mechanism, on the surface of reagent liquids of reagent dispenser 38, as described with reference to later drawings, to aspirate an aliquot of reagent and immiscible liquid IL. The immiscible liquid IL which is thereby introduced into probe 62 replaces the immiscible liquid IL used throughout the analyzer and is, itself, replaced by immiscible liquid IL flowing down the outside of probe 62. For example, if probe 62, conduit 70 and other conduits of the system are formed of polytetrafluoroethylene, fluorocarbon can be used as immiscible liquid IL. This is described in greater detail in our European Patent Specification No. 109277.

Housing 71 also encloses metering apparatus 90 which uses segment position sensing in conjunction with flow-stopping valve(s) to control (meter) sample/reagent aspiration into conduit 70 so as to define a fluid package to perform a particular analysis. Multiple detectors (sensors) and valves can generate different segment patterns of air/liquid volumes. In a preferred embodiment, metering apparatus 90 aspirates, in order, (1) an aliquot of a sample to be analyzed, and (2) an aliquot of a first reagent, which combines with the sample aliquot in conduit 70 to form a first liquid segment, i.e., the first stage of a two-stage reaction, (3) a small segment of air, (4) an aliquot of a second reagent which constitutes a second liquid segment, i.e. the second stage of a two-stage reaction, and (5) a large segment of air. Controller 10 coordinates the operation of assembly 20, reagent assembly 30, probe assembly 60 and immiscible liquid IL dispenser assembly 80 with each other and with metering assembly 90, an example of which is described in more detail with reference to later drawings. Each fluid package contains the components necessary for one of the many individual analyses which can be performed on a particular sample. Multiple aliquots of a particular sample can be aspirated, each in association with a separate test package containing reagents appropriate for the analysis of interest. Successive test packages are thereby established containing reagents for analyses which can be selected in any order.

Segment combining zone 100 of the invention includes a narrow section 102 through which segments, established as described above, flow sequentially into expanding diameter flotation zone 104 and, thereafter, to an enlarged mixing zone 106. The final diameter of flotation zone 104 is equal to that of mixing zone 106. The first liquid segment comprising a mixture of the first reagent and the sample, enters flotation zone 104. The succeeding small air segment, which is of insufficient volume to occlude flotation zone 104 enters, becomes buoyant in and floats to the top of flotation zone 104. Thereafter, the second liquid segment, comprising the second reagent or a diluent for the first segment enters flotation zone 104 and begins to mix with the first liquid segment, forming a new segment which is the combination of the two, previously separated, liquid segments. Following combination of the liquid segments, mixing of and the reaction between sample, first reagent and second reagent segments begin. The succeeding large air segment enters flotation zone 104 and is of sufficient volume to occlude such zone. The large air segment coalesces with the small non-occluding air segment therein. The "combined" air segment and combined liquid segments enter enlarged section 106. The combined liquid segments are continually mixed during travel through subsequent portions of the system and are thereafter analyzed. The "combined" air segment serves to maintain successive combined liquid segments, each resulting from a test package, discrete during flow along the system. This sequence of events and alternate embodiments are described in further detail with reference to later drawings.

The successive combined liquid segments, separated from each other by an occluding air segment, flow through conduit 70 and into detector assembly 110, which includes a series of colorimeters 112, a bypass valve 114 and an ion-specific electrode 116. Colorimeters 112 are selectively activated by controller 10 based on the type of analysis to be performed. Static or kinetic assays, using one or more of colorimeters 112, can be performed over a broad spectrum of wavelengths. Bypass valve 114 directs flow of a test package to branch conduit 74. Branch conduits 172 and 74 come together at juncture 76, which is connected to pump tube 78 of peristaltic pump 120. Peristaltic pump 120 operates to provide the motive force for pulling all fluids into and through the system. Fluids which pump 120 has pulled through the system are passed to waste.

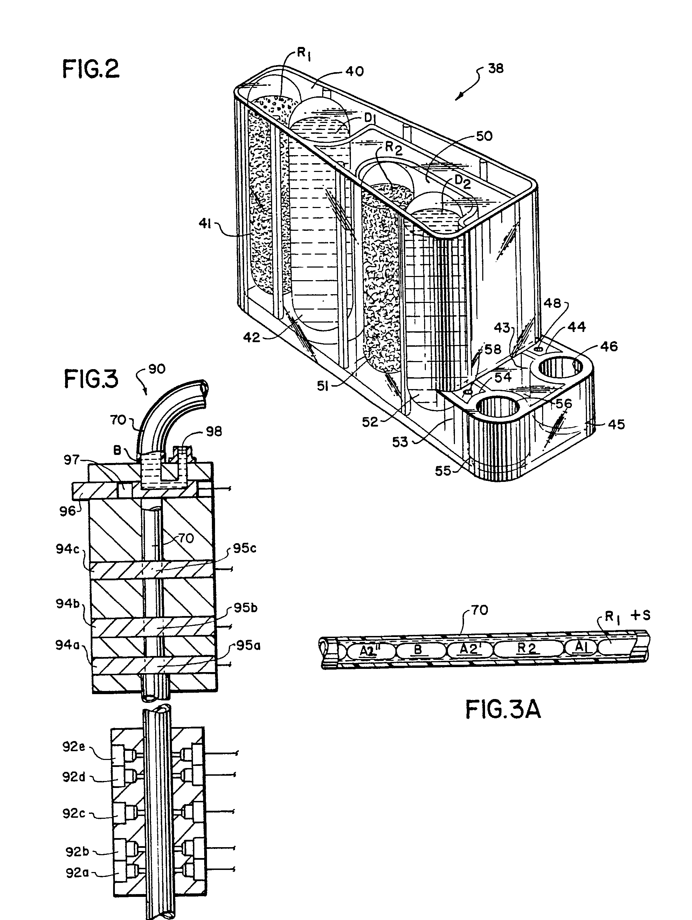

Fig. 2 illustrates two-reagent dispenser package 38 in greater detail. The reagent dispenser illustrated is of an inert material, such as plastic, and contains corresponding reagents $R_1$ and $R_2$ of a particular assay composition. The components of dispenser 38 which relate to reagents $R_1$ and $R_2$ are substantially identical, but for their position. Reagent dispenser 38 includes two reagent supply compartments 40 and 50, each of which encloses two breakable capsules. Capsules 41 and 51 contain lyophilized reagents $R_1$ and $R_2$, respectively. Capsules 42 and 52 contain reconstituting diluents $D_1$ and $D_2$, both of which are usually buffers. Reagent dispenser 38 has flexible side walls which permit external pressure to break reagent capsules 41 and 51 and reconstituting diluent capsules 42 and 52. This is done while reagent dispenser 38 is tilted on its back. It is then gently rocked to reconstitute and mix reagents $R_1$ and $R_2$ concurrently. When reagent dispenser 38 is righted and positioned on a turntable, as shown in the drawing discussed above, reagents $R_1$ and $R_2$ flow through supply ports 43 and 53 into reagent troughs 44 and 54, respectively. At the outlet of reagent troughs 44 and 54 are filters 45 and 55. Reagents $R_1$ and $R_2$, respectively, pass through filters 45 and 55 into dispensing wells 46 and 56. A fluid level equilibrium is established between reagent supply compartments 40 and 50 and their respective dispensing wells 46 and 56. Both dispensing wells have a hydrophilic interior surface. The dimensions and hydrophilic surfaces of dispensing wells 46 and 56 combine with the wetting characteristics of reagents $R_1$ and $R_2$, respectively, to form a concave reagent meniscus in each well which is reliably suitable to position a drop of immiscible liquid thereon. A drop of immiscible liquid IL is positioned on each meniscus, either manually or from an immiscible liquid dispenser as described above. Immiscible liquid IL is immiscible with all other fluids in the system, including sample, reagent buffer and air and forms discrete lenses (so-called because of their shape) on the meniscus of reagents $R_1$ and $R_2$, respectively, due to the balance of interfacial tensions of the three fluids (reagent, immiscible liquid and air) at the points of three-phase contact which constitute the periphery of the lens. These lenses 47 and 57 are centrally located by the concave shape of each meniscus.

The analysis system probe (not shown), preferably made of a solid fluoropolymer, sequentially intersects an immiscible fluid lens and reconstituted reagent, liquid, both of which are aspirated into the analysis system. During system operation, a certain amount of reagent is aspirated from dispensing wells 46 and 56. As this occurs, the level of reagent in reagent trough 44 and 54 is also lowered. When the level falls enough to partially expose either of supply ports 43 and 53 to air, air flows into respective reagent supply compartments 40 and 50 to replace that volume of reagent which is permitted to flow out into reagent troughs 44 or 54. Vents 48 and 58 allow introduction of air to troughs 44 and 54. Thus, the reagent levels in dispensing wells 46 and 56 remain within a range until the reagent supply is nearly depleted. Upon depletion of either of reagent $R_1$ or $R_2$, dispenser 38 is discarded. Reagent dispenser 38 is a preferred embodiment of the reagent package which is the subject of our European Patent Specification No. 109277.

Fig. 3 illustrates metering assembly 90 including (a) an array of position sensors 92a—92e, such as photodetectors, specific ones of which are programmed to detect the interface between a selected air segment and following liquid segment, and (b) stop valves 94a—94c and buffer valve 96 which are positioned a specified distance downstream of the array of position sensors. Stop valves 94a—94c, respectively, form valve ports 95a—95c. buffer valve 96 includes valve port 97 and buffer injection port 98 which introduces buffer B from a reservoir (not shown) into conduit 70 so as to bisect the large air segment of each test package.

The volume of each aspirated segment is established by the position of the appropriate one of detectors 92a—92e relative to the point of aspiration, the inlet end of the probe. A pulse is generated by the appropriate one of detectors 92a—92e which is carried to controller 10 along line 91. In response thereto, a stored program in controller 10 generates a signal along lead 93 to actuate the appropriate one of stop valves 94a—94c and buffer valve 96, which stops aspiration of fluid through the probe by traversing conduit 70 through an air segment. Since the valve cuts through air only, no fluid is handled by this action and carryover, i.e. contamination between succeeding liquid segments, is prevented. As selected large air segments pass through conduit 70 at buffer valve 96, the valve is actuated to bisect the air segment by introducing a segment of buffer B through buffer injection port 98.

Fig. 3A illustrates a preferred embodiment of a fluid "test package" established by the metering apparatus of Fig. 3 and including, in order, a sample S segment which combines as shown with first reagent $R_1$ segment, small air segment $A_1$, a second reagent $R_2$ segment and a large air segment $A_2$, which is divided into equal segments $A_2{}'$ and $A_2{}''$ by a segment of buffer B. The introduction of buffer B further ensures against unwanted carryover. Sample S is first aspirated and, immediately thereafter, reagent $R_1$ is aspirated with no intervening air segment. These two liquids are thus permitted to commingle and form a substantially homogeneous single segment. The two reagents, reagents $R_1$ and $R_2$, are introduced in substantially equal amounts, usually about 7.0 microliters ($\mu$l). The volume of aspirated sample S is much less than that of either reagent, usually about 1.0 $\mu$l. The volume ratio of the small and large air segments is preferably about 1:10, rather than the proportions used for illustration, and usually about 0.5 $\mu$l:5.0 $\mu$l. The aliquot of buffer B is usually about 2.0 $\mu$l.

Successive test packages are thus created and flowed along a single channel of a continuous flow analytical system. The metering apparatus and method of providing the successive "test packages" are more fully described in our European Patent Specification No. 109198.

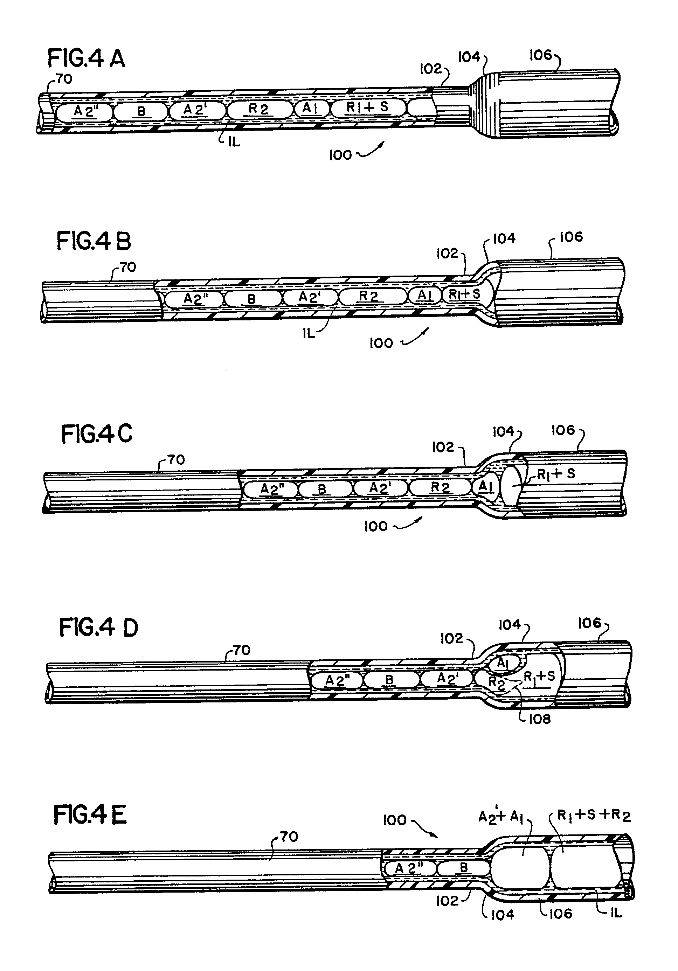

Figs. 4A—4E depict the passage of the related segments of a single test package from the narrow section 102 of a segment combining zone 100, through a flotation zone 104, and into an enlarged mixing section 106. The ratio of the inner diameters of narrow section 102 and enlarged mixing section 106 can be from about 1:1.5 to about 1:3. The inner surface of conduit 70, including segment combining zone 100, is coated throughout with an immiscible liquid IL, which preferentially wets the inner surface, preventing contact of a segment therewith.

The segments so created are shown, in order, at a cut-away portion of conduit 70. Sample S and first reagent $R_1$ have been combined, as described, to form a single segment $R_1+S$. Small air segment $A_1$ follows segment $R_1+S$ and keeps it separated from the second reagent segment $R_2$. Second reagent segment $R_2$ is followed by the first portion $A_2{}'$ of the large air segment buffer, segment B and then the second portion $A_2{}''$ of the large air segment. Air segment portions $A_2{}'$, B and $A_2{}''$ keep the preceding reactive segments of each test package separated from subsequent test packages. The fluid stream is flowing in the direction indicated by the arrow, as depicted in Fig. 4A. As shown in Fig. 4B, the $R_1+S$ segment flows into flotation zone 104 and is followed by small air bubble $A_1$.

Fig. 4C illustrates the movement of small air bubble $A_1$ into flotation zone 104. Small air bubble $A_1$ is losing contact with the lower surface of the inner wall and beginning to rise in the flotation zone 104. It is just after this point that occlusion is negated.

As shown in Fig. 4D, small air segment $A_1$ has ceased to occlude and floated to the top of flotation zone 104. Segment $R_2$ passes into flotation zone 104 and begins to mix with segment $R_1+S$, as shown by phantom line 108. A new segment, which is the combination of segments $R_1+S$ and $R_2$, is thus formed. Following combination of the segments, mixing of and the reaction therebetween begins. Air segment $A_2{}'$ is about to enter flotation zone 104.

In Fig. 4E, small air segment $A_1$ has coalesced with air segment $A_2'$ to form air segment $A_2'+A_1$. The "combined" air and liquid segments followed by the segment of buffer B and air segment $A_2''$ travel through enlarged section 106, the combined liquid segment being continuously mixed as it travels. It is thereafter analyzed by a colorimeter or ion selective electrode.

The structure and procedure used in this embodiment can be applied to a series of such flotation zones along a conduit. For example, the mixed liquid segment formed by combining two segments, each having a different reaction mixture component, can be made to combine with another liquid segment which follows a "combined" air segment. To achieve this, another enlargement can provide a flotation zone in which the combined air segment is non-occluding. A liquid segment following the combined air segment is thereby caused to combine with the mixed liquid segment which was established at the first flotation zone.

In another embodiment, not illustrated, separated liquid segments, e.g. corresponding to $R_1+S$ and $R_2$, are brought together by fragmenting the intervening air segment into a plurality of smaller bubbles. These small bubbles float freely in the segment which is the combination of the previously separated segments and do not occlude the conduit or interfere with mixing of components from the previously separated segments. Various techniques can be used to fragment the occluding air segment. These include, for example, physically striking the tubing, vibrating the tubing with external mechanical apparatus or vibrating the segment by passing disruptive energy waves, such as sound waves, therethrough.

Yet another embodiment of the invention is contemplated which differs from the above embodiments by providing for the physical removal of at least a portion of the intervening air segment so as to render the same non-occluding. This may be accomplished by a semipermeable or porous section of conduit wall, any of a number of various valve arrangements, or other means, such as a debubbler, which connect with the flow path of the conduit. One example of this embodiment is illustrated by Figs. 5A—5C. Fig. 5A depicts the passage of a single test package from a first section 202 of a segment removal zone 200, through a second section 204, which contains a poppet valve 208, and into a third section 206. The inner surface of conduit 70 is coated throughout with immiscible liquid IL. The tip of the poppet valve conforms to or defines a portion of the inner wall surface of conduit 70 when in a closed position, to facilitate the reformation of the immiscible liquid IL layer. A liquid segment $R_1+S$, containing a first reagent $R_1$ and a sample S to be analyzed, is followed by a small air bubble $A_1$. Next is a liquid segment containing a second reagent $R_2$ which is reactive with liquid segment $R_1+S$ to provide a detectable response. The last segment is a large air segment $A_2$ which

separates the above segments from the next successive test package.

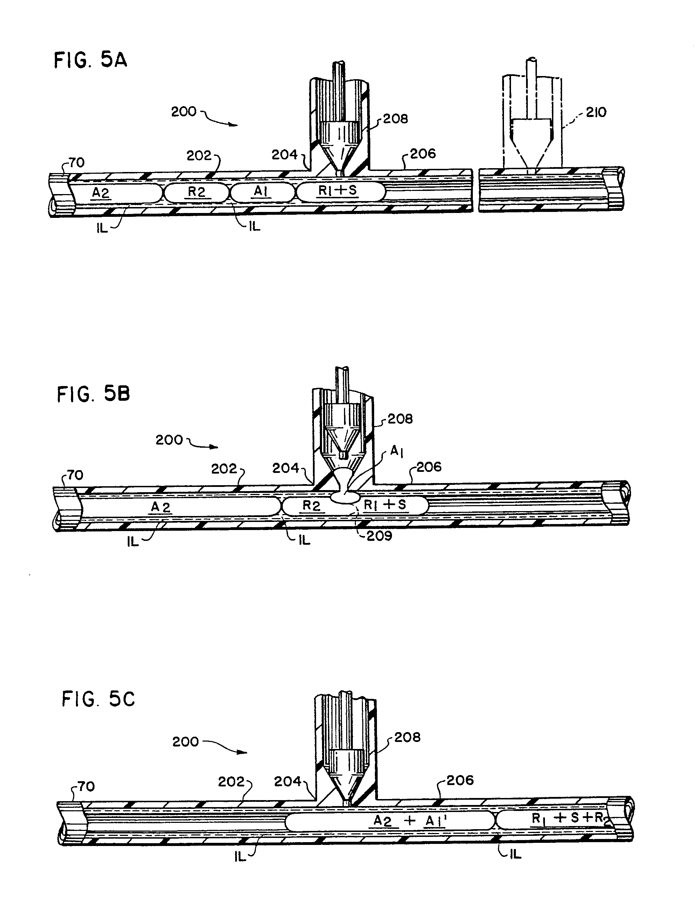

Fig. 5B illustrates the passage of a portion of small air segment $A_1$ into second section 204. At this point, poppet valve 208 is operated, aspirating at least a portion of small air segment $A_1$, thereby rendering it non-occluding along the remainder of the conduit. The remaining portion of small air bubble $A_1$ has lost contact with the lower surface of the inner wall. Segment $R_2$ enters second section 204 and begins to mix with segment $R_1+S$, as shown by phantom line 209. A new segment is thus formed which is the combination of segments $R_1+S$ and $R_2$. Following combination of the liquid segments, mixing of and the reaction between $R_1$, $R_2$ and S begins. Large air bubble $A_2$ is about to enter second section 204.

In Fig. 5C, air bubble fragment $A_1'$ is all that remains of small air segment $A_1$. Air fragment $A_1'$ momentarily remains stationary, is contacted by and combines with large air segment $A_2$ to form combined air segment $A_2+A_1'$ which travels through the third section 206. The combined liquid segment is continuously mixed as it travels through third section 206. It is thereafter analyzed by any of numerous conventional methods, some of which are identified below.

The structure and procedure used in this embodiment can be applied using a series of such aspiration apparatus along the same conduit. Referring again to Fig. 5A, a second poppet valve 210 (shown in phantom) is positioned downstream of poppet valve 208. Combined segment $R_1+S+R_2$ formed in the first test package can be made to later combine with another liquid segment or sequence of segments, which follows combined air segment $A_1+A_2$. Aspiration of a sufficient portion of combined air segment $A_1+A_2$ by operation of poppet valve 210 renders it non-occlusive. A liquid following air segment $A_2$ is thereby caused to mix with combined segment $R_1+S+R_2$, which was combined by operation of poppet valve 208.

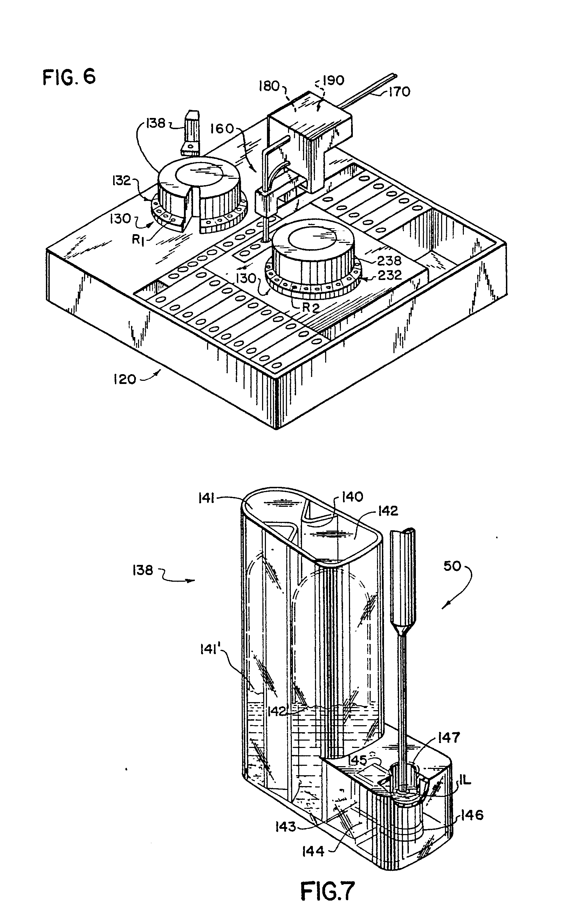

Fig. 6 illustrates an alternative embodiment of the front end of the system in which all of the first reagents $R_1$ for the assays to be performed are in single well reagent dispensers 138 positioned on a first reagent turntable 132 which is connected to bidirectional rotation drive means (not shown). All of the second reagents $R_2$ for the assays to be performed are in single well reagent dispensers 238 positioned on a second reagent turntable 232 which is connected to another bidirectional rotation drive means (not shown). The drive means are independently activated by a controller (not shown), such as the one previously described, to impart a metered rotation of reagent turntable 132 or 232 as needed to present a selected reagent dispenser 138 or 238, respectively, for aspiration of liquid therefrom and into conduit 170. As in previously described embodiments, a controller coordinates the operation of sample assembly 120, reagent assembly 130, probe assembly 160, immiscible liquid IL dispenser assembly 180 and metering assembly 190. Each of these components is substantially as described with reference to earlier drawings, as is the sequence of aspiration and system operation.

Fig. 7 illustrates reagent dispenser 138 in greater detail. The structure of reagent dispenser 238 is substantially identical although the reagent and reconstituting liquid packaged therein are different. Thus, reagent dispenser 138 will be described as exemplary of both. Reagent dispenser 138 includes a reagent reservoir 140 which encloses two breakable capsules 141 and 142, respectively containing lyophilized reagent 141' and reconstituting liquid 142', usually buffer. Reservoir 140 has flexible side walls which permit external pressure to break capsules 141 and 142. When reagent dispenser 138 is positioned on a turntable, the reagent in reservoir 140 flows through port 143 into reagent trough 144, defined by side walls 145. At the other end of trough 144 is filter 146. A fluid level equilibrium is established between reservoir 140 and dispensing well 147.

A drop of immiscible liquid IL is positioned on the meniscus, either manually or from an immiscible liquid dispenser. Reagent dispenser 138 operates in the same manner as that described for either of the first reagent $R_1$ or second reagent $R_2$ dispensing components of the two reagent dispensers previously described. Reagent dispenser 138 is another preferred embodiment of the reagent package of our European Specification No. 109277.

The detector assembly provided in the system of the invention measures a characteristic of or other detectable response associated with the original sample by appropriate analytical techniques. Examples are electromagnetic radiation such as fluorescence, phosphorescence, chemiluminescence, changes in light absorption, reflectance or scattering in the visible, ultraviolet or infrared ranges. Also included is any observable change in a system parameter such as a change in or appearance of a reactant, observable precipitation or agglutination of any component in the reaction mixture as well as one which is detectable through the senses directly or by the use of ancillary detection means.

After the analytical result, such as a reaction product, is obtained as a detectable change, it is measured, usually by passing the reaction mixture through a zone in which suitable apparatus for reflection, emission transmission, scattering or fluorescence photometry is provided. Such apparatus serves to direct a beam of energy, such as light, through the conduit. The light then passes to a detector. Generally, electromagnetic radiation in the range of from about 200 to about 900 nanometers (nm) has been found useful for such measurements, although any radiation to which the conduit and reaction mixture are permeable and which is capable of quantifying the response provided can be used. Such detection means can include instruments such as spectrophotometers, ultraviolet light-sensing equipment, fluorometers, spectrofluorometers, nephelometers, turbidimeters, pH meters or electrodes.

Although the invention has been described with particularity, numerous changes in the details, combinations and arrangements of elements may be resorted to without departing from the scope of the claims.

Reference is made to EP—A—200235 which is divided from the present specification.

**Claims**

1. Apparatus for continuous flow analysis, which apparatus comprises a conduit (70), having in sequence a first (102), a second (104) and a third (106) section, introducing means (90) for introducing fluids into the conduit, means (120) for pumping through the conduit a fluid stream comprising at least a first ($R_1+S$) and a second ($R_2$) liquid segment separated by an immiscible fluid segment ($A_1$); means in said second section of the conduit for displacing said immiscible fluid segment to allow said first and second liquid segments to combine and thereafter pass along said third conduit section whilst undergoing complete mixing therein, and means (110) for receiving said mixture from said third section;

characterized in that: the conduit is arranged to receive fluid only at one end thereof, said introducing means introducing said liquids and fluid at said one end of said conduit into said first section thereof.

2. Apparatus according to claim 1, which further comprises means for combining said completely mixed segments with another segment.

3. Apparatus according to claim 1 or 2, wherein said second section of conduit has completely closed walls.

4. Apparatus according to claim 1, 2 or 3, wherein said conduit sections are such that said first immiscible segment is occlusive in said first section of conduit and non-occlusive in at least a portion of said second section and in said third section, said second section preferably being of diameter greater than that of said first section.

5. Apparatus according to claim 1, 2, 3 or 4, wherein said displacing means comprises means (208) along said second section of said conduit for removing at least a portion of said first immiscible segment therefrom.

6. Apparatus according to any of claims 1 to 5, wherein means are provided to supply to the inner surface of said conduit a coating of a continuous film of a liquid which is immiscible with said fluid package and which preferentially wets said inner surface.

7. Apparatus according to claim 6, wherein said first immiscible segment comprises at least one gas segment and said continuous film liquid is a fluorocarbon.

8. Apparatus according to any of claims 1 to 7, wherein said receiving means comprises means (112, 116) for measuring a detectable response in said completely mixed segment.

9. Apparatus according to any preceding claim, wherein said introducing means (90) is adapted for introducing successive test packages including liquid segments which comprise different components of a reaction mixture and are separated by at least one gas segment into said one end of the conduit (70).

10. Apparatus according to claim 9, which further comprises means (10) for controlling the introduction of said liquid and gas segments of said test package.

11. Apparatus according to claim 9 or 10, wherein said means for introducing said test package segments comprises means for introducing all of said segments through a single conduit inlet.

12. Apparatus according to any of claims 1 to 11, which comprises means (112, 116) for analyzing said completely mixed segment.

13. Apparatus according to claim 9, 10, 11 or 12, wherein said conduit is of a solid fluorocarbon.

14. Apparatus according to claim 1, which comprises: a solid fluorocarbon conduit (70) having an inner surface which (in use) is coated with a continuous film of a liquid fluorocarbon; an aspirating probe (62) and associated metering assembly (90) adapted to introduce successive liquid segments ($R_1+S$; $R_2$) which are different components of a reaction mixture and separated by at least one gas segment ($A_1$) into the first section (102) of said conduit, said gas segment being occlusive in said first conduit section; the second section (104) of said conduit having a diameter sufficient to render said gas segment non-occlusive, thereby combining said separated segments, upstream of said pump; a detector assembly (110) along said third conduit section which comprises at least one colorimeter (112) and at least one ion selective electrode (116); a peristaltic pump (120) for passing said segments through said conduit which is along said third conduit section downstream from said detector assembly; and a controller (10) for controlling the aspirating probe and associated metering assembly, detector assembly and pump.

15. A continuous flow analysis method which comprises pumping a fluid stream comprising at least first and second liquid segments ($R_1+S$; $R_2$) separated by an immiscible fluid segment ($A_1$), through a conduit (70) comprising in sequence a first section (102), a second section (104) and a third section (106), and displacing the immiscible fluid segment to cause the first and second liquid segments to combine in the second section and to undergo complete mixing whilst passing along the third section; characterised in that: the liquid and fluid segments are all introduced into said conduit at one end only to flow into the said first section of the conduit.

16. A method according to claim 15, wherein combining said separated segments comprises rendering said immiscible segment ineffective to occlude said second conduit section.

**Patentansprüche**

1. Gerät zur Analyse mit kontinuierlichem Durchfluß, welches Gerät einen Kanal (70) aufweist, der aufeinanderfolgend einen ersten (102), einen zweiten (104) und einen dritten (106) Abschnitt aufweist, eine Einleitungseinrichtung (90) zum Einleiten von Fluiden in den Kanal, eine Einrichtung (120), die durch den Kanal einen Fluidstrom pumpt, der zumindest ein erstes ($R_1+S$) und ein zweites ($R_2$) Flüssigkeitssegment aufweist, die durch ein nicht mischbares Fluidsegment ($A_1$) getrennt sind; eine Vorrichtung in diesem zweiten Abschnitt des Kanals zur Verschiebung dieses nicht mischbaren Fluidsegments, um diesem ersten und zweiten Flüssigkeitssegment zu ermöglichen, sich zu vereinigen und anschließend diesen dritten Kanalabschnitt, während sie in diesem einer vollständigen Mischung unterliegen, zu durchfließen, und eine Vorrichtung (110), die diese Mischung aus diesem dritten Abschnitt aufnimmt; dadurch gekennzeichnet, daß der Kanal so ausgelegt ist, daß er nur an einem seiner Enden Fluid aufnimmt, wobei diese Einleitungseinrichtung diese Flüssigkeiten und Fluid an diesem einen Ende dieses Kanals in dessen ersten Abschnitt einleitet.

2. Gerät nach Anspruch 1, welches weiterhin eine Einrichtung zur Vereinigung dieser vollständig gemischten Segmente mit einem weiteren Segment aufweist.

3. Gerät nach Anspruch 1 oder Anspruch 2, in welchem dieser zweite Kanalabschnitt vollständig geschlossene Wandungen aufweist.

4. Gerät nach Anspruch 1, 2 oder 3, in welchem diese Kanalabschnitte so ausgebildet sind, daß dieses erste nicht mischbare Segment in diesem ersten Kanalabschnitt okklusiv und zumindest in einem Bereich dieses zweiten Abschnitts und in diesem dritten Abschnitt nichtokklusiv ist, wobei dieser zweite Abschnitt vorzugsweise einen Durchmesser aufweist, der größer als der dieses ersten Abschnitts ist.

5. Gerät nach Anspruch 1, 2, 3 oder 4, in welchem die verschiebende Vorrichtung eine Einrichtung (208) längs dieses zweiten Kanalabschnitts aufweist, die zumindest einen Teil diese ersten nicht mischbaren Segments hieraus entfernt.

6. Gerät nach jedem der Ansprüche 1 bis 5, in welchem Vorrichtungen vorgesehen sind, die die Innenfläche dieses Kanals mit einem Überzug aus einem kontinuierlichen Film einer Flüssigkeit versorgen, die mit diesem Fluidfüllpaket nicht mischbar ist und die diese Innenfläche vorzugsweise benetzt.

7. Gerät nach Anspruch 6, in welchem dieses erste nicht mischbare Segment zumindest ein Gassegment aufweist und dieser kontinuierliche Flüssigkeitsfilm ein Fluorkohlenstoff ist.

8. Gerät nach jedem der Ansprüche 1 bis 7, in welchem diese aufnehmende Vorrichtung Einrichtungen (112, 116) zum Messen eines in diesem vollständig gemischten Segment feststellbaren Ansprechens aufweist.

9. Gerät nach jedem der vorhergehenden Ansprüche, in welchem diese Einleitungseinrichtung (90) so ausgelegt ist, daß sie aufeinanderfolgende Testfüllpakete, welche Flüssigkeitssegmente enthalten, die verschiedene Komponenten einer Reaktionsmischung aufweisen und durch zumindest ein Gassegment getrennt sind, in dieses eine Ende des Kanals (70) einleitet.

10. Gerät nach Anspruch 9, welches ferner Mittel (10) zur Steuerung der Einleitung dieser Flüssigkeits- und Gassegmente dieses Testfüllpakets aufweist.

11. Gerät nach Anspruch 9 oder Anspruch 10, in welchem die Einrichtung zur Einleitung dieser Testfüllpaketsegmente Mittel zur Einleitung sämtlicher dieser Segmente durch einen einzigen Kanaleinlaß aufweist.

12. Gerät nach jedem der Ansprüche 1 bis 11, welches Einrichtungen (112, 116) zur Analyse dieses vollständig gemischten Segments aufweist.

13. Gerät nach Anspruch 9, 10, 11 oder 12, in welchem dieser Kanal aus einem festen Fluorkohlenstoff besteht.

14. Gerät nach Anspruch 1, welches aufweist:

einen Kanal (70) aus einem festen Fluorkohlenstoff mit einer Innenfläche, die (bei Benutzung) mit einem kontinuierlichen Film aus einem flüssigen Fluorkohlenstoff überzogen ist;

eine Ansaugsonde (62) und eine hinzugefügte Meß- und Dosieranordnung (90), die so ausgelegt ist, daß sie aufeinanderfolgende Flüssigkeitssegmente ($R_1+S$; $R_2$), die verschiedene Komponenten einer Reaktionsmischung sind und durch zumindest ein Gassegment ($A_1$) getrennt sind, in den ersten Abschnitt (102) dieses Kanals einleitet, wobei dieses Gassegment in diesem ersten Abschnitt okklusiv ist; in welchem der zweite Abschnitt (104) dieses Kanals einen ausreichenden Durchmesser, um dieses Gassegment stromaufwärts zu dieser Pumpe nicht okklusiv zu machen, aufweist, wodurch diese getrennten Segmente vereinigt werden;

eine Detektoranordnung (110) längs dieses dritten Kanalabschnitts, die zumindest ein Kolorimeter (112) und zumindest eine ionenselektive Elektrode (116) aufweist;

eine peristaltische Pumpe (120), die dazu dient, diese Segmente durch diesen Kanal zu leiten und die sich entlang dieses dritten Kanalabschnitts stromaufwärts von dieser Detektoranordnung befindet; und

eine Steuereinheit (10) zur Steuerung der Ansaugsonde und der hinzugefügten Meß- und Dosieranordnung, der Detektoranordnung und Pumpe.

15. Analyseverfahren mit kontinuierlichem Durchfluß, welches umfaßt, einen Fluidstrom, der zumindest ein erstes und ein zweites Flüssigkeitssegment ($R_1+S$, $R_2$), die durch ein nicht mischbares Fluidsegment ($A_1$) getrennt sind, enthält, durch einen Kanal (70) zu pumpen, der aufeinanderfolgend einen ersten Abschnitt (102), einen zweiten Abschnitt (104) und einen dritten Abschnitt (106) aufweist, und das nicht mischbare Fluidsegment zu verschieben, um zu bewirken, daß sich dieses erste und zweite Flüssigkeitssegment im zweiten Abschnitt vereinigen und einer vollständigen Mischung unterliegen, während sie den dritten Abschnitt durchströmen;

dadurch gekennzeichnet, daß diese Flüssigkeits- und Fluidsegmente sämtlich an nur einem Ende in diesem Kanal zur Einfließen in diesen ersten Abschnitt des Kanals eingeleitet werden.

16. Verfahren nach Anspruch 15, in welchem diese Vereinigen dieser getrennten Segmente umfaßt, dieses nicht mischbare Segment für ein Verschließen dieses zweiten Abschnitts unwirksam zu machen.

**Revendications**

1. Appareil d'analyse avec écoulement continu, lequel appareil comprend un conduit (70) comportant successivement une première (102), une seconde (104) et une troisième (106) sections, un moyen d'introduction (90) pour l'introduction de fluides dans le conduit, un moyen (120) pour pomper par le conduit un courant de liquide comprenant au moins un premier ($R_1+S$) et un second ($R_2$) segments de liquide séparés par un segment de fluide immiscible ($A_1$); un moyen prévu dans ladite seconde section du conduit pour déplacer ledit segment de fluide immiscible afin de permettre auxdits premier et second segments de liquide de se combiner et de passer ensuite par ladite troisième section de conduit en y subissant un mélange total, et un moyen (110) pour recevoir ledit mélange à partir de ladite troisième section;

caractérisé en ce que: le conduit est agencé pour ne recevoir du fluid qu'à une de ses extrémités, ledit moyen d'introduction introduisant lesdits liquides et fluide à ladite extrémité dudit conduit à l'intérieur de la dite première section de celui-ci.

2. Appareil selon la revendication 1, qui comprend encore un moyen pour combiner lesdits segments complètement mélangés avec un autre segment.

3. Appareil selon la revendication 1 ou 2, dans lequel la dite seconde section de conduite présente des parois complètement fermées.

4. Appareil selon la revendication 1, 2 ou 3, dans lequel lesdites sections de conduit sont telles que ledit premier segment immiscible est occlusif dans ladite première section de conduit et non occlusif dans une partie au moins de ladite seconde section et dans ladite troisième section, ladite seconde section étant de préférence de diamètre supérieur à celui de ladite première section.

5. Appareil selon la revendication 1, 2, 3 ou 4, dans lequel ledit moyen de déplacement comprend un moyen (208) situé le long de ladite seconde section dudit conduit pour en éliminer une partie au moins dudit premier segment immiscible.

6. Appareil selon l'une quelconque des revendications 1 à 5, dans lequel des moyens sont prévus pour faire arriver sur la surface intérieure dudit conduit un revêtement de pellicule continue d'un liquide qui est immiscible avec ledit lot de fluides et qui mouille préférentiellement ladite surface intérieure.

7. Appareil selon la revendication 6, dans lequel ledit premier segment immiscible est constitué par au moins un segment de gaz et ledit liquide en pellicule continue est un fluorocarbure.

8. Appareil selon l'une quelconque des revendications 1 à 7, dans lequel ledit moyen récepteur comprend des moyens (112, 116) pour mesurer une réponse décelable dans ledit segment complètement mélangé.

9. Appareil selon l'une quelconque des revendications précédentes, dans lequel ledit moyen d'introduction (90) est agencé pour introduire des lots d'essai successifs comportant des segments de liquide formés par différents constituants d'un mélange réactionnel et séparés par au moins un segment de gaz, dans ladite extrémité du conduit (70).

10. Appareil selon la revendication 9, qui comprend encore un moyen (10) de commande de l'introduction desdits segments de liquide et de gaz dudit lot d'essai.

11. Appareil selon la revendication 9 ou 10, dans lequel ledit moyen d'introduction desdits segments de lots d'essai comprend un moyen pour l'introduction de tous lesdits segments par une seule entrée de conduit.

12. Appareil selon l'une quelconque des revendications 1 à 11, qui comprend des moyens (112, 116) d'analyse dudit segment complètement mélangé.

13. Appareil selon la revendication 9, 10, 11 ou 12, dans lequel ledit conduit est en un fluorocarbure solide.

14. Appareil selon la revendication 1, qui comprend: un conduit en fluorocarbure solide (70) présentant une surface intérieure qui est revêtue (en service) d'une pellicule continue d'un fluorocarbure liquide; une sonde aspirante (62) et un ensemble doseur associé (90) aptes à introduire des segments de liquide successifs ($R_1+S$; $R_2$),

qui sont des constituants différents d'un mélange réactionnel et sont séparés par au moins un segment de gaz ($A_1$), à l'intérieur de la première section (102) dudit conduit, ledit segment de gaz étant occlusif dans ladite première section de conduit; la seconde section (104) dudit conduit ayant un diamètre suffisant pour rendre ledit segment de gaz non occlusif, combinant par là lesdits segments séparés, en amont de ladite pompe; un ensemble détecteur (110) situé le long de ladite troisième section de conduit qui comprend au moins un colorimètre (112) et a moins une électrode à sélectivité ionique (116); une pompe péristaltique (120), pour faire passer lesdits segments par ledit conduit, située le long de ladite troisième section de conduit en aval dudit ensemble détecteur; et une commande (10) pour la commande de la sonde aspirante et de l'ensemble doseur associé, de l'ensemble détecteur et de la pompe.

15. Procédé d'analyse avec écoulement en continu qui comprend le pompage d'un courant de fluid comprenant au moins un premier et un second segments de liquide ($R_1+S$; $R_2$) séparés par un segment de fluide immiscible ($A_1$), à travers un conduit (70) comprenant en succession une première section (102), une seconde section (104) et une troisième section (106) et le déplacement du segment de fluide immiscible en vue d'amener les premier et second segments de liquide à se combiner dans la seconde section et à subir un mélange total en passant dans la troisième section;

caractérisé en ce que: les segments de liquide et de fluide sont tous introduits dans ledit conduit à une extrémité seulement pour pénétrer à l'intérieur de ladite première section du conduit.

16. Procédé selon la revendication 15, dans lequel la combinaison desdits segments séparés comprend l'étape consistant à rendre ledit segment immiscible inapte à occlure ladite seconde section de conduit.

FIG.I

102 104 106

90 70 100

71 80 93

82 91

60 112 114

64 23

24 84

S 26 62 38 72 74

28 32 30

27 110 116

R2 RI 22

20

22 63 76

61 78

21 31 120

CONTROLLER 10

14 RECORDER

USER CONSOLE 12

WASTE

0 109 278

FIG.2

FIG.3

FIG.3A

# 0 109 278

**FIG.4 A**

**FIG.4 B**

**FIG.4 C**

**FIG.4 D**

**FIG.4 E**

3

0 109 278

FIG. 5A

FIG. 5B

FIG. 5C

FIG. 6

FIG.7